# EUROPEAN PATENT APPLICATION

(11) **EP 2 238 837 A1**
(43) Date of publication of application: **13.10.2010**
(21) Application number: 10159066.9
(22) Date of filing: 02.04.2010
(51) Int. Cl.: A23C 19/032, A23C 19/11

(54) **Nisin-tolerant culture comprising at least two Lactococcus strains and Leuconostoc, and method for producing cheese**

(30) Priority: 06.04.2009 EP 09157358
(71) Applicant: CSK Food Enrichment B.V., 8938 AS Leeuwarden (NL)
(72) Inventor: Brandsma, Johannes Bernhard, 8398 GL, Blesdijke (NL); Meijer, Willem Cornelis, 6712 HA, Ede (NL)
(74) Representative: Ketelaars, Maarten F.J.M.

(57) **Abstract**

The present invention relates amongst others to a nisin-tolerant acidifying culture comprising a nisin-resistant strain of *Lactococcus lactis* subsp. *lactis,* a nisin-resistant strain of *Lactococcus lactis* subsp. *cremoris* and a nisin/resistant strain of *Leuconostoc.* The invention also provides a method for making cheese using this nisin-tolerant acidifying culture. The nisin-tolerant acidifying culture may provide a good stability regarding phages which would make a commercially available nisin-immune strain fall out and whilst retaining a characteristic flavour of a high quality cheese, especially of a Gouda-type cheese.

## Description

### Field of the invention

The present invention relates to a nisin-tolerant acidifying culture, which is particularly suitable for producing cheese. The invention also relates to a kit-of-parts or mixture comprising a nisin-producing culture and the nisin-tolerant acidifying culture. The invention also relates to a method for producing a nisin-tolerant bulk starter which comprises using the nisin-tolerant acidifying culture. In particular, the invention also provides a method for making cheese which comprises using the nisin-producing acidifying culture and a cheese obtainable by said method.

### Background of the invention

Avoiding outgrowth of unwanted micro-organisms in cheese is of key interest to a cheese maker. To this end, nitrate is commonly employed as an additive in the cheese-making process, especially to prevent outgrowth of unwanted bacteria such as Clostridia. However, this use of nitrate is associated with a risk of nitrite ending up in the cheese. Therefore, nisin, a lanthionine-containing antimicrobial peptide, is increasingly used to at least partially replace nitrate. Nisin may be suitably produced *in situ* by employing nisin-producing strains of *Lactococcus lactis.*

A nisin-producing starter culture allowing for nisin production and acidification of cheese milk is commercially available, e.g. as a combination of Dairysafe^{™} cultures *ex* CSK Food Enrichment BV, The Netherlands. The Dairysafe^{™} starter culture contains a nisin-producing *L. lactis* subsp. *lactis* biovar. *diacetylactis* strain containing a Tn5276 transposon; this strain is referred to as TC17. Said starter culture also contains a nisin-immune *L. lactis* subsp. *cremoris* strain containing a *Tn5276-NI* transposon; this strain is referred to as 13M. As is stated in EP1273237, TC17 and 13M may be used in about equal amounts for producing Gouda cheese comprising 150-400 IU nisin per gram cheese.

EP1273237 also teaches species of nisin-resistant non-*L. lactis* strains which may be particularly favourably used in combination with the Dairysafe^{™} starter culture in order to produce cheese having special properties, such as a Maasdam-type cheese.

R.F. Roberts, E.A. Zottola and L.L. McKay, in J. Dairy Sci. 75 (1992), pp. 2353-2363, disclose a nisin-producing starter comprising a nisin-producing strain of *Lactococcus lactis* spp. *lactis* NCDO 1404 and a nisin-positive transconjugant strain of *Lactococcus lactis* spp. *cremoris* JS102 (Abstract).

L. Sallami, E.E. Kheadr, I. Fliss and J.C. Vuillemard, in J. Dairy Sci. 87(2004), pp. 1585-1594 disclose a Cheddar cheese starter culture of *Lactococcus lactis* KB and *Lactococcus cremoris* KB (Abstract), said strains being selected for nisin Z tolerance (p. 1586, left column, last paragraph). These strains were individually grown and then subcultured on a medium and before providing a 1:1 vol/vol mixed starter culture (p. 1586, legend to Table 1). A nisin-Z producing strain of *Lactococcus lactis* spp. *lactis* biovar. *diacetylactis* UL719 was in one instance used as an adjunct culture (abstract, Table 1.)

S.N. Karlikanova et al. In "Properties of nisin-producing and nisin-resistant starters", 1970, FSTA, XP002186754, discloses a nisin-resistant starter composed of 2 *Str. lactis* strains, 1 strain of *Str. cremoris* and 1 strain of *Str. diacetylactis*. The starter is used in the preparation of Kostrumi cheese.

### Summary of the invention

To date, only a nisin-immune lactococcal strain (e.g. 13M from CSK Food Enrichment) is commercially employed as a single strain together with a nisin-producing culture (such as TC17) as a starter culture for producing a semi-hard or hard cheese, especially a Gouda-type cheese. Since any industrial cheese making process is always vulnerable to phage attacks, there is a long-felt need for a phage-robust alternative to the above-mentioned nisin-immune lactococcal strains.

In a first aspect, the invention provides a nisin-tolerant acidifying culture comprising a nisin-resistant strain of *Lactococcus lactis* subsp. *lactis,* a nisin-resistant strain of *Lactococcus lactis* subsp. *cremoris* and a nisin-resistant strain of *Leuconostoc.* It is understood that said culture is a so-called mixed-strain culture. In other words, said culture comprises a plurality of different nisin-tolerant strains provided as a mixture. Apart from having sufficient acidifying capacity in the presence of one or more phages which would make a nisin-immune lactococcal strain (especially a commercially available one) fall out, it has been found that this nisin-tolerant acidifying culture, as compared to a commercially available nisin-immune strain provides for a cheese having an improved flavour profile, especially with regard to complexity and/or richness of the flavour profile of said cheese. Herein, the improved flavour profile preferably additionally or alternatively relates to (1) the absence of bitter off-flavours, and/or (2) the presence of a typical Gouda-type flavour as established by an expert panel. The cheese is preferably a Gouda-type cheese. On a separate notice, there are no nisin-tolerant acidifying cultures known comprising a nisin-resistant strain of *Leuconostoc*.

A nisin-tolerant culture is a bacterial culture which may exhibit metabolic activity in a suitable medium to which 10 units or more, such as 20 units or more, 30 units or more, 40 units or more, preferably 50 units or more of nisin per ml have been added. Even more preferably, to said suitable medium at least 100 units per ml, or most preferably at least 500 units of nisin per ml have been added. It is preferred that to said suitable medium, less than 10,000 units/ml has been added, even more preferably less than 5,000 or less than 2,000 units of nisin/ml. Nisin tolerance of bacteria may be obtained by adapting the bacteria to (increasing concentrations) of nisin; such nisin-tolerant bacteria are specifically referred to as "nisin-resistant." Alternatively, nisin tolerance may be obtained by providing bacteria with genetic information that is present on, or derived from a transposon, and which information encodes for nisin tolerance; these nisin-tolerant bacteria are specifically referred to as "nisin-immune". Thus, nisin-resistant strains are devoid of genetic information for nisin tolerance that is present on, or derived from a transposon.

In a second aspect, the invention provides a method for preparing a nisin-tolerant bulk starter suitable for making cheese which comprises
a. providing a nisin-tolerant acidifying culture comprising a nisin-resistant strain of *Lactococcus lactis* subsp. *lactis and* a nisin-resistant strain of *Lactococcus lactis* subsp. *cremoris*, and a suitable growth medium for said culture, and mixing said culture with said growth medium; and
b. incubating the mixture thus obtained, to provide the nisin-tolerant bulk starter for making cheese. The mixture is preferably incubated at a temperature of 10-30 °C, and further preferably until the pH of the mixture becomes inhibitory to the nisin-tolerant acidifying culture.

The invention also relates to a nisin-tolerant bulk starter obtainable by this method. More generally, the invention also relates to a nisin-tolerant bulk starter obtainable by growing the nisin-resistant acidifying culture into a suitable medium, such as milk. It is understood that in step (a.) of this method, the nisin-tolerant acidifying culture is provided as a mixed-strain culture. Advantageously, the use of the nisin-tolerant acidifying culture in the method for preparing the nisin-tolerant bulk starter requires only a single incubation step whilst allowing to grow a plurality of different strains simultaneously. Especially by contrast to methods whereby a bulk starter is obtained by mixing individual cultures individually grown in separate containers, the method for preparing the nisin-tolerant bulk starter according to the invention requires not only a lot less effort *per se,* it furthermore prevents that such efforts are wasted on the growing of individual cultures in separate containers which under the circumstances would fall out against a phage. It is especially preferred that the nisin-tolerant acidifying culture is provided as a dried or frozen culture; accordingly, it can be conveniently stored for a suitable time before being used, whilst keeping its properties. The nisin-tolerant bulk starter has the further advantage that it is economic in use. Furthermore, it has been found that a stock of this nisin-tolerant bulk starter may be suitably be prepared in advance, using which stock a cheese maker is able to produce, throughout at least one working day, different batches of cheese, whilst one or more processing parameters, especially the acidification time, may be kept essentially constant between the productions of said batches. Herein, at least one batch of cheese is preferably produced using added nisin or a nisin-producing culture and at least another batch of cheese is preferably produced in the presence of added nisin or a nisin-producing culture.

In a third aspect, the present invention relates to a method for providing nisin-resistant lactic acid bacteria, the method comprising
a. incubating a mother culture in a medium comprising an initial low concentration of nisin;
b. repeatedly passing on lactic acid bacteria capable of growing at the initial low concentration to a medium comprising increasingly higher concentrations of nisin until lactic acid bacteria are obtained which are tolerant to at least 100 units of nisin per ml, more preferably to at least 500 units of nisin per ml.
The lactic acid bacteria are preferably selected from the group consisting of *Lactococci* and *Leuconostoc.* It is preferred that the nisin concentration in (b) is less than 10,000 units of nisin per ml, more preferably less than 5,000 or less than 2,000 or even less than 500 units of nisin per ml. Herein, the term "mother culture" is known in the art of preparing bulk starters and preferably relates to an inoculum for preparing a bulk starter, the inoculum comprising a plurality of strains of lactic acid bacteria, wherein said plurality includes one or more, preferably two or more strains of lactococci. Preferably, said plurality further comprises one or more strains of Leuconostoc. The mother culture preferably comprises mesophilic lactic acid bacteria; most preferably the mother culture is mesophilic. In a further embodiment, said mother culture is suitable for producing semi-hard cheese, preferably Gouda type of cheese. The lactic acid bacteria which are passed on in step (b.) preferably relate to a single strain or a single colony of lactic acid bacteria. The invention further provides a nisin-resistant strain of lactococci obtainable by this method. The invention also provides a nisin-resistant strain of Leuconostoc obtainable by this method. It is especially preferred that at least two of the nisin-resistant strains of lactococci comprised by the nisin-tolerant acidifying culture are obtainable by this method, whereby said strains may be obtained from the same mother culture or from different mother cultures. It is most preferred that each of the nisin-resistant strains of lactic acid bacteria comprised by the nisin-tolerant acidifying culture is obtainable by this method, whereby said strains may be obtained from the same mother culture or from different mother cultures.

In a fourth aspect, the invention provides a kit-of-parts or mixture comprising a nisin-producing culture and the nisin-tolerant acidifying culture. Suitable nisin-producing strains may be selected from Table 3 of WO 92/18633. The nisin-producing culture preferably comprises a nisin-producing strain of *Lactococcus lactis.*

The invention therefore also provides a method for making at least two different batches of cheese, said method comprising:
a. providing a stock of the nisin tolerant bulk starter;
b. inoculating a batch of a cheese milk composition comprising a source of nisin with an amount of the nisin-tolerant bulk starter; and
c. inoculating a batch of a cheese milk composition which is free of a source of nisin with an amount of the nisin-tolerant bulk starter;
wherein the amounts of the nisin-tolerant bulk starter in (b.) and (c.) are each supplied from the stock provided under (a.).
Herein, the source of nisin is preferably an added nisin and/or an added nisin-producing culture. The cheese milk composition comprises milk and preferably further comprises a coagulant and optionally one or more adjunct cultures. The stock is preferably provided fresh. Preferably, the at least two different batches of cheese are each produced within a period of 24 hours; further preferably, said batches of cheese are each produced within 24 hours after providing the stock of the nisin tolerant bulk starter. Further preferably, the batches of the cheese milk compositions under (b.) and (c.) are inoculated at approximately the same concentration of the nisin-tolerant bulk starter. This method especially allows the cheese maker to switch between nisin-producing cultures and non-nisin producing cultures whilst being able to reproducibly achieve the same or at least very similar acidification times of the milk between different cheese vats. This is especially important in an industrial setting.

In yet another aspect, the invention relates to a method for making cheese which comprises the step of using the nisin-tolerant acidifying culture or the nisin-tolerant bulk starter of the invention. This method preferably further comprises providing a cheese milk composition comprising milk, the nisin-tolerant acidifying culture or the nisin-tolerant bulk starter of the invention, a nisin-producing culture, and a coagulant.

The invention also provides a cheese obtainable by any one of said methods for making cheese, especially a semi-hard or hard cheese, most preferably a Gouda type of cheese.

The invention (thus) also provides a Gouda-type cheese comprising a nisin-resistant strain of Lactococcus lactis subsp. lactis, a nisin-resistant strain of Lactococcus lactis subsp. cremoris and a nisin-resistant strain of Leuconostoc. Further, the invention provides such Gouda-type cheese comprising at least three different nisin-resistant strains of Lactococcus lactis subsp. lactis, at least three different nisin-resistant strains of Lactococcus lactis subsp. cremoris, and at least three different nisin-resistant strains of Leuconostoc. In yet another aspect, the invention provides such Gouda-type further comprising a nisin-resistant strain of Lactococcus lactis subsp. lactis biovar. Diacetylactis, especially further comprising at least three different nisin-resistant strains of *Lactococcus lactis* spp. *lactis* biovar. *diacetylactis*.

In yet another aspect, the invention relates to a method for producing two or more batches of cheese, wherein
a. at least one batch of cheese is produced in the presence of a source of nisin and a nisin-immune strain of *Lactococcus lactis*, and
b. at least one batch of cheese is produced in the presence of a source of nisin and a nisin-resistant strain of *Lactococcus lactis*;
wherein the nisin-immune lactococcal strain under (a.) is not used together with the nisin-resistant strain under (b.); and
wherein the batches of cheese under (a.) and (b.) are produced on the same premises.

Herein, the source of nisin is preferably an added nisin and/or an added nisin-producing culture. As explained hereafter, nisin-immunity and nisin-resistance are both examples of nisin tolerance.

### Detailed description of the invention

### Definitions

The expression "nisin" may be read as "a nisin" and may relate to any nisin, for example relate to nisin A or nisin Z. Unless expressly indicated otherwise, the term "nisin" or "a nisin" as used herein relates to nisin A or nisin Z. However, in an embodiment of the present invention, the expression "nisin" may be read as "a type I bacteriocin". A type I bacteriocin is known to the person skilled in the art, and preferably relates to a lantibiotic or to a lanthionine or methyllanthionine containing peptide bacteriocin. The lanthionine or methyllanthionine containing peptide bacteriocin preferably has a molecular weight < 10 kDa.

Nisin activity is determined based on a bioassay agar method with *Micrococcus flavus* as indicator strain (Bouksaim et al., 2000; Effects of mixed starter composition on nisin Z production by L. lactis subsp. lactis biovar. diacetylactis UL 719 during production and ripening of Gouda cheese. International J. of Food Microbiol. 59, 141-156). Nisin activity is expressed in units (or IU), in which 40 units (or IU) corresponds with 1 µg of pure nisin.

The term "nisin-tolerant acidifying culture" relates to a culture comprising lactic acid bacteria which may show metabolic activity in a suitable medium to which nisin has been added at 10 units/ml or more, more preferably at least 50 units/ml or more, and which is capable of reducing the pH of said medium to below 5.5, more preferably to below 5.0, most preferably to below 4.8. It is most preferred that, to said suitable medium at least 100 units per ml, or most preferably at least 500 units of nisin per ml have been added. It is preferred that to said suitable medium, less than 10,000 units/ml of nisin have been added, even more preferably less than 5,000 or less than 2,000 units/ml of nisin. The medium preferably comprises milk (optionally further comprising a growth-promoting additive) or two or more medium ingredients selected from the group consisting of a carbon source (preferably lactose) and a growth-promoting additive. The growth promoting additive may be suitably selected as a mixture of peptides and/or amino acids (for example as peptone and/or tryptone). In an embodiment, the nisin-tolerant acidifying culture is a nisin-tolerant mother culture.

The term "nisin-tolerant bulk starter" relates to a bulk starter comprising lactic acid bacteria which, when added to a pasteurised cheese milk composition at about 1 wt.% with respect to the weight of the milk, is capable of reducing the pH of the cheese milk composition by at least 0.5 pH unit, more preferably by at least 1 pH unit during incubation of the cheese milk composition for 6 hours at a temperature of 30 °C, wherein prior to said incubation the cheese milk composition comprises an amount of nisin at 10 units/ml or more, more preferably at 50 units/ml or more, most preferably at 100 units/ml or 500 units/ml or more. Herein, the cheese milk further preferably comprises less than 10,000 units of nisin per ml, more preferably less than 5,000 units/ml or less than 2,000 units/ml. The nisin-tolerant bulk starter is preferably not capable of producing more than 10 units of nisin per ml of the pasteurised milk composition during incubation for 8 to 40 hours in said milk at 30-42 °C which has been inoculated with the bulk starter in an amount of about 0.5 to 1 wt.% of the bulk starter with respect to the weight of the milk. Optionally, the cheese milk composition comprises a growth-promoting additive which may be suitably selected as one or more additives selected from the group consisting of a peptide (such as peptone or tryptone), an amino acid and proteinase-positive lactic acid bacteria.

A traditional bulk starter (such as C02 or Fr18) is nisin-intolerant and, when added to a pasteurised cheese milk composition at about 1 wt.% with respect to the weight of the milk, is incapable of reducing the pH of the cheese milk composition by at least 0.5 pH unit, more preferably by at least 1 pH unit during incubation of the cheese milk composition for 6 hours at a temperature of 30 °C, wherein prior to said incubation the cheese milk composition comprises an amount of nisin at 10 units/ml or higher, more preferably at 50 units/ml or higher or at 100 units/ml or higher. This traditional nisin-intolerant bulk starter is not capable of producing more than 10 units or at least more than 50 units of nisin per ml of the pasteurised milk composition during incubation for 8 to 40 hours in said milk at 30-42 °C which has been inoculated with the bulk starter in an amount of about 0.5 to 1 wt.% of the bulk starter with respect to the weight of the milk.

The term "bulk starter" has its ordinary meaning and relates to a starter culture comprising lactic acid bacteria, which starter culture is prepared by inoculating a suitable medium with a mother culture, and allowing the mother culture to grow in the medium. Said mother culture comprises one or more genera of lactic acid bacteria, preferably in an amount of at least 10⁷ cfu/ml (overall count), most preferably in an amount of at least 10¹⁰ cfu/ml (overall count); the overall cell count of the mother culture may be lower than 10¹³ cfu/ml or 10¹² cfu/ml. The medium is typically inoculated with about 125 ml of the mother culture per 1000 litres of the medium. The medium usually comprises milk and/or two or more medium ingredients selected from the group consisting of a carbon source (preferably lactose) and a growth-promoting additive. The growth-promoting additive is suitably selected as one or more additives selected from the group consisting of a peptide (such as peptone or tryptone), an amino acid and proteinase-positive lactic acid bacteria.

The bulk starter is considered ready for use if the mother culture has been allowed to grow until the pH of the medium becomes inhibitory to the culture, and cell growth stops (usually below pH 5.5 and preferably below pH 5.0; if, for example, the medium is milk, typically at around pH 4.6); this usually takes up to 20 hours, or preferably 16 hours after inoculation of the medium with the mother culture when fermented at 21°C. At this stage, the bulk starter preferably has a total cell count of between 10⁶-10¹⁰ cfu/ml.

In the present description, a bulk starter is preferably provided, obtained or employed as a ready for use bulk starter. A bulk starter is generally named after the mother culture from which it can be prepared, unless otherwise indicated; thus, "C02" may relate both to a commercially available mother culture and to a (ready for use) bulk starter obtainable by growing said mother culture in a suitable medium, as indicated above.

The term "lactic acid bacteria" is known to the person skilled in the art and may preferably be defined as Gram positive, non-spore-forming, anaerobic, catalase negative cocci or rods forming lactic acid as an end product of their carbohydrate metabolism. Well-known genera include *Carnobacterium, Enterococcus, Lactobacillus, Lactococcus, Lactospaera, Leuconostoc, Oenococcus, Pediococcus, Streptococcus, Vagococcus* and *Weissella.*

In the present description "mesophilic" is used to indicate lactic acid bacteria which exhibit an optimum growth at below about 33 °C, preferably at between about 15 and about 33 °C.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

### The culture

The nisin-resistant strains of lactococci and of *Leuconostoc* comprised by the nisin-tolerant culture may be obtained by any method which is known in the art, for example by adaptation of single strains of lactococci to increasing concentrations of nisin. However, nisin-resistant strains of lactococci and of *Leuconostoc* obtainable by the method for providing nisin-resistant lactic acid bacteria of the invention provide the best results, especially regarding acidification of the cheese milk, and in particular when used in a method to produce Gouda-type cheese.

The nisin-tolerant acidifying culture preferably comprises nisin-resistant lactic acid bacteria in a total amount of at least 10⁸ cfu/ml, more preferably in an amount of at least 10⁹ cfu/ml, most preferably in an amount of at least 10¹⁰ cfu/ml. Accordingly, it may be suitably employed in a cheese making process as an adjunct starter, or for preparing a bulk starter. The amount of nisin-resistant lactic acid bacteria in the acidifying culture is generally less than 10¹³ cfu/ml (although this cell count may be higher). The nisin-resistant lactococci preferably provide at least 30%, more preferably at least 50% of the total amount of nisin-resistant lactic acid bacteria. Accordingly, optimal acidification of a cheese milk composition comprising the nisin-tolerant acidifying culture may be achieved.

The nisin-tolerant acidifying culture is preferably in the form of frozen pellets.

It is generally preferred that the nisin-tolerant acidifying culture comprises a plurality of nisin-resistant lactococcal strains. Said plurality preferably comprises at least 3 nisin-resistant strains of lactococci. Said plurality more preferably comprises at least 4, even more preferably at least 5, most preferably at least 6 strains or even at least 10 nisin-resistant strains of lactococci. Accordingly, phage sensitivity of the nisin-tolerant acidifying culture may be further reduced. Alternatively or more preferably additionally, to achieve even better phage robustness of the nisin-tolerant acidifying culture, it is even more preferred that said nisin-tolerant acidifying culture comprises at least 3, more preferably at least 4, even more preferably at least 5, most preferably at least 6 or even at least 10 different nisin-resistant strains of *Lactococcus lactis* subsp. *lactis.* In order to further improve phage robustness, the nisin-tolerant acidifying culture preferably further comprises at least 3, more preferably at least 4, even more preferably at least 5, most preferably at least 6 or even at least 10 different nisin-resistant strains of *Lactococcus lactis* subsp. *cremoris*. Although there is no theoretical upper limit to the number of strains comprised by the nisin-tolerant acidifying culture, in practice, the nisin-tolerant acidifying culture comprises less than 500, more preferably less than 100, most preferably less than 50 different nisin-resistant lactococcal strains. It is especially preferred that the nisin-tolerant acidifying culture comprises between 10 and 100, even more preferably between 25 and 75 different nisin-resistant strains of lactococci. For optimal phage stability, also a plurality of nisin-resistant strains of *Leuconostoc* is preferably present. Said plurality preferably comprises at least 3, even more preferably at least 4, even more preferably at least 5, most preferably at least 6 or even at least 10 strains. Although there is no theoretical upper limit to the number of strains comprised by the nisin-tolerant acidifying culture. in practice, the nisin-tolerant acidifying culture comprises less than 500, more preferably less than 100, most preferably less than 50 different nisin-resistant strains of *Leuconostoc.* It is especially preferred that the nisin-tolerant acidifying culture comprises between 5 and 100 different nisin-resistant strains of *Leuconostoc*.

The nisin-tolerant acidifying culture preferably further comprises a nisin-resistant strain of *Lactococcus lactis* subsp. *lactis* biovar. *diacetylactis*. Accordingly, a typical Gouda-flavour can be further enhanced. In order to further improve phage robustness, the nisin-tolerant acidifying culture preferably further comprises at least 3, more preferably at least 4, even more preferably at least 5, most preferably at least 6 or even at least 10 different nisin-resistant strains of *Lactococcus lactis* subsp. *lactis* biovar. *diacetylactis*.

The nisin-resistant strains of lactococci and *Leuconostoc* are preferably mesophilic. It is even further preferred that the nisin-tolerant acidifying culture is mesophilic.

In view of the above, the following embodiments are especially preferred:
- a nisin-tolerant acidifying culture comprising at least three different nisin-resistant strains of *Lactococcus lactis* subsp. *lactis,* at least three different nisin-resistant strains of *Lactococcus lactis* subsp. *cremoris*, and at least three different nisin-resistant strains of *Leuconostoc*.
- a nisin-tolerant acidifying culture comprising at least three different nisin-resistant strains of *Lactococcus lactis* subsp. *lactis,* at least three different nisin-resistant strains *of Lactococcus lactis* subsp. *cremoris*, at least three different nisin-resistant strains of *Leuconostoc,* and at least three different nisin-resistant strains of *Lactococcus lactis* subsp. *lactis* biovar. *diacetylactis*.
With such large biodiversity in the nisin-tolerant acidifying culture, a method for producing cheese can be achieved which even in the presence of phages can yield a relatively constant acidification rate whilst at the same time cheese can be obtained having a relatively constant flavour profile.

More generally the invention may also relate to:
- a nisin-tolerant acidifying culture comprising at least three different nisin-resistant strains of *Lactococcus lactis* subsp. *lactis* and at least three different nisin-resistant strains *of Lactococcus lactis* subsp. *cremoris*.
- a nisin-tolerant acidifying culture comprising at least three different nisin-resistant strains of *Lactococcus lactis* subsp. *lactis,* at least three different nisin-resistant strains of *Lactococcus lactis* subsp. *cremoris*, and at least three different nisin-resistant strains of *Lactococcus lactis* subsp. *lactis* biovar. *diacetylactis*.

In an especially preferred embodiment, the nisin-tolerant acidifying culture comprises a total bacterial population which essentially consists of a mixture essentially consisting of the population of nisin-resistant lactococci and of the nisin-resistant strain(s) of *Leuconostoc.* In each case, the total bacterial population comprised by said culture may optionally further contain a nisin-immune strain of lactic acid bacteria, especially a nisin-immune lactococcal strain. Said culture is particularly advantageously employed in the method for preparing a nisin-tolerant bulk starter, for the nisin-tolerant bulk starter obtainable thereby and for the method for making cheese using the nisin-tolerant bulk starter. Accordingly, the culture may be especially favourably produced for producing a semi-hard or hard cheese. The culture is even more preferably a mesophilic culture. Accordingly, a high quality Gouda type of cheese may be advantageously produced.

### The method for providing nisin-resistant lactic acid bacteria

In the method for providing nisin-resistant lactic acid bacteria, the method comprising
a. incubating a mother culture in a medium comprising an initial low concentration of nisin;
b. repeatedly passing on lactic acid bacteria capable of growing at the initial low concentration to a medium comprising increasingly higher concentrations of nisin until lactic acid bacteria are obtained which are tolerant to at least 100 units of nisin per ml, more preferably to at least 500 units of nisin per ml,
the initial low concentration of the nisin is preferably between 5 and 25 units / mL, more preferably between 5 and 15 units / mL.

Alternatively, it is possible to first select individual strains of lactic acid bacteria, preferably from a mother culture, and then
a. incubating said strains in a medium comprising an initial low concentration of nisin;
b. repeatedly passing on strains capable of growing at the initial low concentration to a medium comprising increasingly higher concentrations of nisin until strains of lactic acid bacteria are obtained which are tolerant to at least 100 units of nisin per ml, even more preferably to at least 500 units of nisin per ml.
Herein, the initial low concentration of the nisin is preferably between 5 and 25, more preferably between 5 and 15 units/mL.

These methods preferably further comprise incubating, at about 30 °C, the nisin-tolerant lactic acid bacteria obtained in (b.) in a suitable growth medium comprising nisin in an initial concentration of preferably 50-500 units/mL, more preferably at about 100 units/mL (= No), determining the concentration of nisin in the medium after 24h of incubation as N₂₄ (in units/mL), and selecting the lactic acid bacteria capable of providing an N₂₄/N₀ ratio of at least 0.5, more preferably of at least 0.6, most preferably of at least 0.8.

The one or more nisin-resistant lactic acid bacteria obtained by these methods are preferably further grown, either as a single strain or as a mixture of strains, on a suitable medium, and the grown nisin-resistant lactic acid bacteria thus obtained are preferably concentrated using means which may be known *per se,* for example in a (continuous) centrifugation step. The medium may optionally comprise nisin in an amount of at least 10 or at least 50 units/ml. The concentrated lactic acid bacterium may further be (deep) frozen, optionally with pelletization, freeze dried or spray dried.

Surprisingly, it has been found that for each embodiment, the nisin concentration in (b) is preferably between 20 and 500 units of nisin per ml. Accordingly, a favourable balance can be obtained between nisin resistance and capability to acidify milk or another suitable growth medium at a sufficient rate. In view of this surprising finding, the nisin-tolerant acidifying culture or the nisin-tolerant bulk starter is preferably tolerant to nisin concentrations of between 20 and 500 units/ml. Therefore, it is preferred that one or more and most preferably all of the nisin-resistant strains comprised by the nisin-tolerant acidifying culture or the nisin-tolerant bulk starter are obtainable by a method comprising incubating lactic acid bacterial strains in a medium comprising an initial low concentration of nisin, and repeatedly passing on strains capable of growing at the initial low concentration to a medium comprising increasingly higher concentrations of nisin until strains of lactic acid bacteria are obtained which are tolerant to at least 20 and to at most 500 units of nisin per ml; herein the initial low concentration of nisin is preferably at least 10 units of nisin per ml. In view of this, in practice it goes that the nisin-tolerant acidifying culture, when added to a pasteurised cheese milk composition at about 1 wt.% with respect to the weight of the milk, is preferably capable of reducing the pH of the cheese milk composition by at least 1 pH unit during incubation of the cheese milk composition for 6 hours at a temperature of 30 °C, wherein prior to said incubation the cheese milk composition comprises an amount of nisin at 20-500 units/ml, and is preferably incapable of reducing the pH of the cheese milk composition by more than 1 pH unit during incubation of the cheese milk composition for 6 hours at a temperature of 30 °C, wherein prior to said incubation the cheese milk composition comprises an amount of nisin at more than 1000 units/ml. Furthermore, the term "nisin-tolerant bulk starter" in practice especially preferably relates to a bulk starter comprising lactic acid bacteria which, when added to a pasteurised cheese milk composition at about 1 wt.% with respect to the weight of the milk, is capable of reducing the pH of the cheese milk composition by at least 1 pH unit during incubation of the cheese milk composition for 6 hours at a temperature of 30 °C, wherein prior to said incubation the cheese milk composition comprises an amount of nisin at 20-500 units/ml, and in addition is incapable of reducing the pH of a cheese milk composition by more than 1 pH unit during incubation of the cheese milk composition for 6 hours at a temperature of 30 °C, wherein prior to said incubation the cheese milk composition comprises an amount of nisin at more than 1000 units/ml.

### The method for preparing the nisin-tolerant bulk starter

The growth medium for the nisin-tolerant acidifying culture may optionally comprise nisin in an amount of at least 10 or at least 50 units/ml, and further preferably in an amount of less than 10,000 units/ml, 5,000 units/ml or 2,000 units/ml, especially in an amount of less than 500 units/ml, so that further ensurance may be provided to the cheese maker that the nisin tolerant properties of the culture may be reproducibly retained.

The nisin-tolerant acidifying culture is preferably mesophilic.

### The method for making cheese

The method for making cheese preferably further comprises providing a cheese milk composition comprising milk, a coagulant, a nisin-producing culture, and the nisin-tolerant acidifying culture and/or the nisin-tolerant bulk starter. The nisin-tolerant acidifying culture may be used alone or together with the nisin-tolerant bulk starter. In another embodiment, the method for making cheese further comprises providing a cheese milk composition comprising milk, a coagulant, and the kit-of-parts or mixture comprising a nisin-producing culture and the nisin-tolerant acidifying culture of the invention. In an especially preferred embodiment, the method for making cheese comprises providing a cheese milk composition comprising milk, a coagulant, a nisin-producing culture, and the nisin-tolerant bulk starter. The provision of the nisin-tolerant bulk starter may allow for optimal acidification of the cheese milk composition, especially in terms of acidification rate.

The nisin-producing culture may be suitably selected as a nisin-producing lactococcal culture, which may be suitably commercially available, for example as TC17 *ex* CSK Food Enrichment. The nisin-producing culture preferably comprises a nisin-producing strain of *Lactococcus lactis.*

In an embodiment the nisin-producing strain and the nisin-tolerant acidifying culture may be added together to the cheese milk composition, e.g. the nisin-producing strain and said nisin-tolerant acidifying culture are provided as mixture which is added to the cheese milk composition.

In each of these embodiments, the cheese milk composition may comprise one or more flavour adjunct cultures. In a preferred embodiment, these flavour adjunct cultures are nisin-tolerant. Especially preferred flavour adjunct cultures are nisin-resistant non-L. *lactis* strains belonging to a genus selected from the group consisting of *Lactobacillus, Enterococcus Propionibacterium, Kluvyeromyces, Streptococcus, Pediococcus, Arthrobacter, Corynebacterium*.

### The cheese

Preferably, the cheese is a semi-hard or hard cheese. The cheese is most preferably a Gouda or Gouda-type of cheese. The cheese preferably has been ripened during a ripening time of 4 weeks - 2 years, and at a temperature of 5-25 °C, more preferably between 5-18 °C. An especially preferred ripening time is 4 weeks - 9 months. The advantages of the nisin-tolerant acidifying culture or the bulk starter according to the invention relating to organoleptic properties of a cheese are most pronounced if the cheese is ripened according to a traditional Gouda protocol (*i*.*e*. at a temperature of 5-18 °C and at a relative humidity of 80-90 %) and during a ripening time of between 4 weeks - 6 months, and further preferably whilst receiving a layer of a water-borne cheese coating dispersion at regular intervals during ripening ("natural ripened" cheese). The cheese may however also be a foil-ripened or rindless cheese, although the taste and/or consistency of a foil-ripened cheese are generally of less quality than of a natural ripened cheese.

Alternatively, a fresh cheese may be produced using the nisin-tolerant culture or bulk starter according to the invention.

In an embodiment, the cheese contains butyric acid in an amount less than 200 ppm, more preferably less than 100 ppm. Nisin is preferably detectable. The cheese preferably comprises nisin in an amount of at least 20, 40, 80, 150, 300, or 500 IU per gram of cheese. Further preferably, the cheese comprises nisin in an amount of less than 10,000 IU per gram, even more preferably less than 5,000 IU/gram or less than 2,000 IU/gram, most preferably of less than 500 IU/gram. Preferably, the cheese is free of added nitrate, and/or is essentially free of a nitrite.

### EXAMPLES

### Example 1. Preparation of nisin-resistant lactic acid bacteria, production of Gouda cheese, sensory evaluation.

### Preparation of nisin-resistant lactic acid bacteria.

Nisin-resistant strains of *Lactococcus lactis* subsp. *lactis,* of *Lactococcus lactis* subsp. *cremoris*, of *Lactococcus lactis* subsp. *lactis* biovar. *diacetylactis* and of *Leuconostoc* were obtained by incubating several mother cultures including C01, C03, C07, C10, C57 and C71 (ex CSK Food Enrichment BV, The Netherlands) in a suitable medium (Nilac, ex NIZO Food Research, The Netherlands) comprising an initial concentration of nisin of 20 units/ml. For each mother culture, any lactic acid bacteria which were capable of growing in Nilac comprising 20 units/ml nisin were selected using conventional methods and transferred to Nilac comprising 40 units/ml of nisin. This procedure was repeated, by increasing the nisin concentration by 20 units/ml in between subsequent experiments, until lactic acid bacteria were obtained which were tolerant to 300 units of nisin per ml. These strains were selected and stored in Nilac at - (minus) 40 °C.
In this manner, at least 3 nisin-resistant strains of each of *Lactococcus lactis* subsp. *lactis, of Lactococcus lactis* subsp. *cremoris*, of *Lactococcus lactis* subsp. *lactis* biovar. *diacetylactis* and of *Leuconostoc* were selected for subsequent experiments. The strains were defrosted and incubated at 30 °C for 18 h. A mixture of all full grown cultures was prepared and used to inoculate (1%) fresh Nilac medium which was incubated again at 30 °C for 18 h. This full grown culture was further grown on a whey based fermentation medium at 30 °C for 18 hours; this fermentation was ended by cooling the fermentation broth to a temperature below 5 °C. The resulting biomass (hereinafter called: NTB or NTB biomass) was harvested by centrifugation and frozen at - 40 °C. The total cell count of the NTB was 2 * 10¹⁰ cfu/mL.

### Preservation of the nisin resistance property

The preservation of the nisin tolerant properties of the NTB biomass thus produced was examined by incubating 1 % NTB in high pasteurized milk with and without 100 units of nisin per mL at 20 and 30 °C. Cell counts and pH were measured after 18 hours.

| | incubated at 20 °C | | incubated at 30 °C | |
|---|---|---|---|---|
| | without nisin | with nisin | without nisin | with nisin |
| total cell count (cfu/mL) | 4 * 10⁹ | 3 * 10⁹ | 3 * 10⁹ | 8 * 10⁸ |
| pH milk (-) | 4.43 | 4.41 | 4.66 | 4.66 |
| viability NTB (°N) | 54 | 55 | 78 | 79 |

Viability of the NTB is expressed by °N which is the volume (in mL) of an aqueous 0.1 M NaOH solution necessary to raise the pH of a Nilac milk sample, which has been previously incubated with 1% (v/v) of the NTB during 6 hours at 30 °C, to a pH of 8.2 (using phenolphthalein as indicator).
As it appears from the above-mentioned table, cell counts, pH and viability of the NTB biomass are not significantly influenced by the presence of nisin indicating excellent preservation of its nisin tolerant properties.

### Phage stability

The phage stability of the NTB was assessed by incubation repeatedly (up to 7 times) of the NTB in high pasteurized milk (20 °C for 18 h) with and without a broad spectrum phage cocktail potentially capable of affecting each of the selected nisin-resistant strains, said phage cocktail being isolated from whey samples originating from industrial Dutch Gouda cheese production plants.

The viability of the full grown milk culture and the pH of the incubated milk was found not to be significantly affected by the presence of the phage cocktail and in any case remained constant within plus and minus 10 °N between experiments. This demonstrates that the NTB is phage robust. By contrast, nisin-immune strain 13M loses most of its activity, especially after 7 times of repeated incubation.

### Production of Gouda cheese with the NTB

Gouda cheese was produced with a bulk starter derived from the NTB biomass, and with a "regular" nisin-intolerant bulk starter, respectively. Cheese milk (1500 L), calf rennet, CaCl₂ and starter cultures (all ex CSK Food Enrichment, Leeuwarden, The Netherlands) were used to produce full fat (48 +) 12 kg Gouda cheese. A ready-to-use regular Gouda cheese bulk starter C02 and a ready-to-use bulk starter derived from the NTB were prepared by inoculating 1 % of C02 and NTB biomass, respectively, each in 20 L pasteurized milk and incubating at 20 °C for 18 hours. Four batches of cheese milk were then each inoculated with (1) 0.35 % of the ready-to-use C02 based bulk starter; (2) 1 % of the NTB-based bulk starter; (3). 1 % of the NTB-based bulk starter and a nisin producing culture (TC17) employed as direct vat inoculant in an amount of 180 g of culture per 1,500 litres of milk; and (4) 1 % of the NTB-based bulk starter and another nisin producing culture (IM1) employed as direct vat inoculant in an amount of 180 g of culture per 1,500 litres of milk. The moisture content, fat content, salt concentration and pH was similar for all cheeses.

The cheeses were organoleptically evaluated for properties including smell/taste and consistency, after 13 weeks of ripening at 13 °C, by an expert panel who was given the task to evaluate traditional Gouda cheese.

The cheeses produced with the NTB-bulk starter were almost indistinguishable from the Gouda cheese produced with the traditional bulk starter culture C02, especially in terms of smell/taste, and consistency In fact, the organoleptic scores for smell/taste and consistency were all between 6 and 6.5 out of 10 for each and every cheese produced indicating that in the presence of the NTB, truly Gouda cheese having a good quality can be obtained.

By contrast, a similarly prepared and ripened cheese, its preparation only differing from the above-mentioned cheeses in the presence of the culture combination TC17 / 13M with no other added cultures being present, has a significantly lower organoleptic score when reviewed by the same panel, especially regarding taste/smell. Such a cheese not only has a more bland taste, it also has more off-flavours, especially regarding bitter off-flavours.

### Example 2. Preparation of nisin-resistant lactic acid bacteria by a different method. Acidification experiments.

### Preparation of nisin-resistant lactic acid bacteria.

Nisin-resistant strains of *Lactococcus lactis* subsp. *lactis* (including *Lactococcus lactis* subsp. *lactis* biovar. *diacetylactis*), of *Lactococcus lactis* subsp. *cremoris* and of Leuconostoc were obtained by adapting single strains to increasing nisin concentrations. The single strains were isolated from several mother cultures including C01, C03, C07, C10, C57 and C71 (ex CSK Food Enrichment BV, The Netherlands). Adaptation was performed by growing the strains in a suitable medium (Nilac, ex NIZO Food Research, The Netherlands) comprising an initial concentration of nisin of 20 units/ml. Any lactic acid bacteria which were capable of growing in Nilac comprising 20 units/ml nisin were selected using conventional methods and transferred to Nilac comprising 40 units/ml of nisin. This procedure was repeated, by increasing the nisin concentration by 20 units/ml in between subsequent experiments, until lactic acid bacteria were obtained which were tolerant to 500 units of nisin per ml. These strains were selected and stored in Nilac at -(minus) 40 °C.

In this manner, i.e. starting from the corresponding isolated nisin-intolerant single strains, 2 different nisin-resistant strains of each of *Lactococcus lactis* subsp. *lactis,* and of *Lactococcus lactis* subsp. *cremoris*, 1 nisin-resistant strain of *Lactococcus lactis* subsp. *lactis* biovar. *diacetylactis* and 1 nisin-resistant strain of *Leuconostoc* were selected for subsequent experiments. Starting from these nisin-resistant strains, a nisin-tolerant bulk starter was prepared. In parallel, a nisin-intolerant bulk starter was prepared from the corresponding isolated nisin-intolerant single strains. Following incubation of a suitable milk medium with each of the two bulk starters, it could be shown that the acidifying capacity of the nisin-tolerant bulk starter was very similar to the acidifying capacity of the nisin-intolerant bulk starter.

### Example 3 - variant of Example 1. Nisin-resistant strains of Lactococcus lactis subsp. lactis biovar. diacetylactis are left out of the NTB-based bulk starter. In the comparative experiments, C02 is replaced by Fr18.

The experiments of Example 1 can be successfully repeated with the above-mentioned modifications. In particular, in addition to nisin-resistant strains of *Lactococcus lactis* subsp. *lactis* and of *Lactococcus lactis* subsp. *cremoris*, only nisin-resistant strains of *Leuconostoc* are obtained or used, where applicable. Such strains are conveniently isolated from commercially available mother cultures of the so-called L or LD-type, such as for example Fr18.

Alternatively, and preferably, nisin-resistant strains of *Lactococcus lactis* subsp. *lactis,* of *Lactococcus lactis* subsp. *cremoris*, and of *Leuconostoc* can also be prepared by adaptation of single strains as disclosed in Example 2.

Accordingly, an NTB-bulk starter can be obtained comprising at least three different nisin-resistant strains of *Lactococcus lactis* subsp. *lactis,* at least three different nisin-resistant strains of *Lactococcus lactis* subsp. *cremoris*, and at least three different nisin-resistant strains of *Leuconostoc*.

Indeed, for production of Gouda-type cheese using the present NTB-based bulk starter, the number of different species for each nisin-resistant strain can be reduced to about 3 whilst keeping a relatively constant acidification rate AND generating a relatively constant flavour profile at the same time. According to the present example, Gouda-type cheese can be obtained having a flavour profile comparable to Gouda-type cheese prepared in the presence of (nisin-intolerant) bulk starter Fr18.

The present embodiment is especially suitable for preparing a foil-ripened Gouda-type cheese.

## Claims

1. A nisin-tolerant acidifying culture comprising a nisin-resistant strain of *Lactococcus lactis* subsp. *lactis,* a nisin-resistant strain of *Lactococcus lactis* subsp. *cremoris* and a nisin-resistant strain of *Leuconostoc.*

2. The nisin-tolerant acidifying culture according to claim 1, further comprising a nisin-resistant strain of *Lactococcus lactis* subsp. *lactis* biovar. *diacetylactis*.

3. The nisin-tolerant acidifying culture according to any one of claims 1-2, said culture being tolerant to nisin concentrations of between 20 and 500 units/ml.

4. The nisin-tolerant acidifying culture according to any one of the preceding claims, wherein said culture comprises at least three different nisin-resistant strains of *Lactococcus lactis* subsp. *lactis,* at least three different nisin-resistant strains of *Lactococcus lactis* subsp. *cremoris*, and at least three different nisin-resistant strains of *Leuconostoc.*

5. The nisin-tolerant acidifying culture according to claim 4, which further comprises at least three different nisin-resistant strains of *Lactococcus lactis* spp. *lactis* biovar. *diacetylactis*.

6. A method for preparing a nisin-tolerant bulk starter suitable for making cheese which comprises
a. providing a nisin-tolerant acidifying culture comprising a nisin-resistant strain of *Lactococcus lactis* subsp. *lactis and* a nisin-resistant strain of *Lactococcus lactis* subsp. *cremoris*, and a suitable growth medium for said culture, and mixing said culture with said growth medium; and
b. incubating the mixture thus obtained, to provide the nisin-tolerant bulk starter for making cheese.

7. The method according to claim 6, wherein the nisin-tolerant acidifying culture is defined in anyone of claims 1-5.

8. A nisin-tolerant bulk starter obtainable according to the method of claim 7.

9. A method for making cheese which comprises inoculating milk with the nisin-tolerant acidifying culture as defined in any one of claims 1-5.

10. A Gouda-type cheese comprising a nisin-resistant strain of *Lactococcus lactis* subsp. *lactis,* a nisin-resistant strain of *Lactococcus lactis* subsp. *cremoris* and a nisin-resistant strain of *Leuconostoc.*

11. The Gouda-type cheese according to claim 10, comprising at least three different nisin-resistant strains of *Lactococcus lactis* subsp. *lactis,* at least three different nisin-resistant strains of *Lactococcus lactis* subsp. *cremoris*, and at least three different nisin-resistant strains of *Leuconostoc*.

12. The Gouda-type cheese according to any one of claims 10-11, further comprising a nisin-resistant strain of *Lactococcus lactis* subsp. *lactis* biovar. *Diacetylactis*.

13. The Gouda-type cheese according to any one of claims 10-12, further comprising at least three different nisin-resistant strains of *Lactococcus lactis* spp. *lactis* biovar. *diacetylactis*.
